# EUROPEAN PATENT APPLICATION

(11) **EP 1 971 144 A1**
(43) Date of publication of application: **17.09.2008**
(21) Application number: 07104094.3
(22) Date of filing: 14.03.2007
(51) Int. Cl.: H04N 7/173

(54) **Method, software and installation for the creation and distribution of personalized internet TV-channels**

(71) Applicant: Zattoo, Inc., Ann Arbor MI 48105 (US)
(72) Inventor: Jamin Sugih, Ann Arbor, Michigan 48105- 3044 (US); Knecht Beat, Zürich 8001 (CH)
(74) Representative: Felber, Josef

(57) **Abstract**

The method for the creation and distribution of personalized internet TV-channels, comprises the steps of: Creating a train, comprising of a sequence of TV channels, archive content, or content streamed by other providers (e.g. sports events, other internet channels) by defining the channel switching schedule. Then, publishing the train or the train reference into the business operator server and/or in popular social spaces and/or in a computer of a user connected to the internet. Finally, distributing the video content to users through the internet. For implementing this method, an installation for the creation and distribution of personalized TV-channels is suggested with at least one server connected to a source of video content. There is a software installed on that server for the storage and distribution of a multitude of trains. Each train comprises a sequence of online TV-channels and/or recorded TV-channels, and/or video or webcam signals, and/or content acquired by other content providers (e.g. sports events, etc.), in the form of either its identification or identification and content. The installation offers storage capacities for a multitude of such trains and a distribution platform. Further, the installation comprises a user interface for the connection of various users with this server via Internet, so that remote users are able to view the train contents via the internet. Users can create their own trains, can publish them and thereby make them available to a larger circle of persons.

## Description

An embodiment of the invention concerns a method, a software and an installation for the creation and distribution of personalized internet TV-channels. Such individually composed TV-channels which may be based on channels broadcasted by different TV-channels or taken from video records, or provided by other content providers (e.g. sports events, festivals, internet TV stations, record labels, etc.), or provided by users themselves (e.g. personal videos, signals captured by webcams, etc.) will be called trains in the following. Trains can be created by users, distributed over the internet and shared between users watching them by means of this installation and software and using its technical working method. A train therefore is a sequence of existing channels, provided by the business operator or by third parties, with associated switching times.

It is therefore an object of an embodiment of this invention to offer a method, a software and an installation for the creation and distribution of personalized TV channels which do overcome the shortcomings of the state of the art as mentioned above. In particular, it is the aim of this method, software and installation to offer an internet TV providing the users with the opportunity to create their own personalized video channels which can be streamed up to 24 hours per day for up to 7 days per week.

This object is achieved by a method for the creation and distribution of personalized internet TV-channels, comprising the steps of:
a) Creating a train, comprising of a sequence of TV channels, archive content, or content streamed by other providers (e.g. sports events, other internet channels) by defining the channel or source switching schedule, whereby the switching schedule may be defined by specifying the list of channels or sources with associated switching times or by rules;
b) Publishing the train or the reference to the train into the business operator server and/or in popular social spaces and/or into a user's computer which may be linked to the internet, by allowing users to describe the train to be published with attributes (e.g., type of content, information about the author, etc.);
a) Distributing and viewing the train through the internet by retrieving the published train or a reference to the published train by connecting to the central business operator's server, or to social spaces, or to the user's computer, where the train has been published or is being published and executing the schedule of the train.

In detail, trains can be defined as a pre-defined sequence of channels with associated switching times. In this case, trains are defined before viewing time. On the other hand, trains can be defined by rules. For instance, a rule can allow users to watch the same content which is watched by another specified user, or rules can be created that switch channels within a certain category of channels according to some defined pattern (e.g. randomly, according to popularity of the content, etc.), or other rules can be defined. Rules need to be specified before viewing time. In this case the train's content is defined during viewing time. Examples of rules include:
○ Watch what a given user is watching.
○ Watch what is currently most popular.
○ Watch what currently is most popular within a certain type of content (e.g. documentaries).
○ Watch random content and switch channel every 45 minutes.
○ Watch the content which users similar to a given user are watching (such kind of rules are used in recommendation systems).
The steps of the method for the creation and distribution of trains can be summarized in the schema according to **Fehler! Verweisquelle konnte nicht gefunden werden.**. As it is show there, the first step is to create a train by specifying the channel switching sequence. Then, the train is published so as to make it available to other users. Finally, or contemporarily with the publishing, the train may be distributed and viewed by other users.

The object is further achieved by a software on an installation for the creation and distribution of personalized TV-channels as described above, which allows:
a) Creating a train, comprising of a sequence of TV channels, archive content, or content streamed by other providers (e.g. sports events, other internet channels) by defining the channel or source switching schedule, whereby the switching schedule may be defined by specifying the list of channels or sources with associated switching times or may be defined by rules;
b) Publishing the train or the reference to the train into the business operator server and/or in popular social spaces and/or into a user's computer which may be linked to the internet, by allowing users to describe the train to be published with attributes (e.g., type of content, information about the author, etc.);
c) Distributing and viewing the train through the internet by retrieving the published train or a reference to the published train by connecting to the central business operator's server, or to social spaces, or to the user's computer where the train has been published or is being published and executing the schedule of the train.

The object is further achieved by an installation for the creation and distribution of personalized TV-channels, comprising at least one business operator's server connected to sources of video content (e.g. TV-receiver, video recorder, online TV, webcam, etc.), having a digital-analogue-converter for the conversion of the video source signal into a digital signal, further a hardware and software installed on that server for compressing and encrypting said signal and for the storage and distribution of a multitude of trains and archive content, the server further comprising a software with user interface for visualizing and creating trains, the installation further comprising a number of users' computers having a software viewer installed, whereby the user interface, i.e. software viewer, allows users to connect to the business operator's server, or to popular social spaces, or to the users' computers via internet for creating, publishing, retrieving and executing trains which are published there.

Compared to existing products and technologies, the embodiment of this invention presents the following unique and original features:
- A device which allows a user to define his own channel switching sequence for live TV channels and share it with other users by allowing them to watch the same schedule.
- System for defining an own channel switching schedule by the user, so that he can create personalized channels which stream content up to 24 hours per day for up to 7 days per week.
- A user who creates trains can either predefine the switching schedule or allow other users to synchronize to his switching schedule, which may be defined by him ad-hoc. Synchronisation allows other users to watch simultaneously or almost simultaneously (e.g. with latency times lower than 7 seconds) the content of the train.

A "switch-o-mat" is a software component which does automatically execute the channel switches specified by a train. Trains aggregate therefore video content from different sources. Trains can be distributed over the internet using a client-server or a peer-to-peer based communication paradigm. Peer-to-peer data transfer reduces dramatically the streaming costs if compared to traditional client-server streaming mechanisms. Trains contribute to the creation of virtual communities as they can be shared between users and can be published in social spaces (e.g. internet pages such as Facebook, Friendster, MySpace). Trains originate and support social activities such as chatting, dating, e-mailing, discussion forums, etc.

A "switch-o-mat" switches channels according to a defined scheduling. The scheduling can be specified in one of the following ways:
- Users or the business operator define a switching scheduling before viewing time by specifying at which moment in time (date and time) a channel switch occurs (e.g. switch from channel1 to channel2 at time1).
- Rules specify the switching scheduling. Rules can be defined by the business operator or by a user before viewing time while the channel scheduling may be derived from the predefined rule during viewing time (e.g. watch what John is watching).

A "switch-o-mat" can either switch between live channels (i.e. channels which are streamed in real time by the business operator), or switch between time-shifted channels (i.e. channels which have been streamed by the business operator in the past). In case of a sequence containing time-shifted channels, the "switch-o-mat" needs to record the content which needs to be time-shifted on a business operator's server or on one or more of the users' computers. The content may be recorded when it is streamed by the business operator. The business operator's server may then create a new channel with the recorded content and stream it with the same mechanisms used to stream the already existing channels.

Users retrieve the references to trains or trains themselves on a business operator's remote host computer (rhost), or on public social space, or on various computers of users.

The "switch-o-mat" software receives as input a train or a reference to a train and then switches channels automatically. The "switch-o-mat" software can be installed either on a user's machine or on a business operator's remote host computer (i.e. a server). In the first case, the "switch-o-mat" may be embedded into the software viewer, which may be used by users to watch trains. In the latter case, control commands can be sent by the operator's remote host computer to the users' computers, these control commands specify the channel switch (origin channel, destination channel, time of the switch). These control commands can be interpreted and executed by the software viewer.

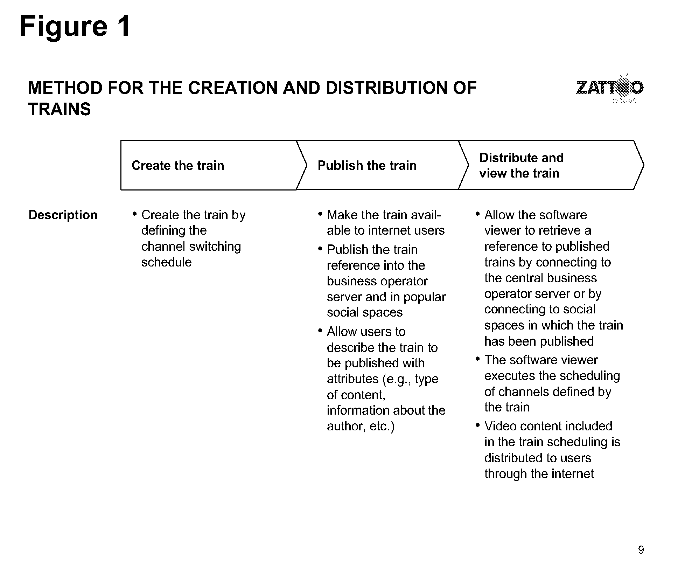

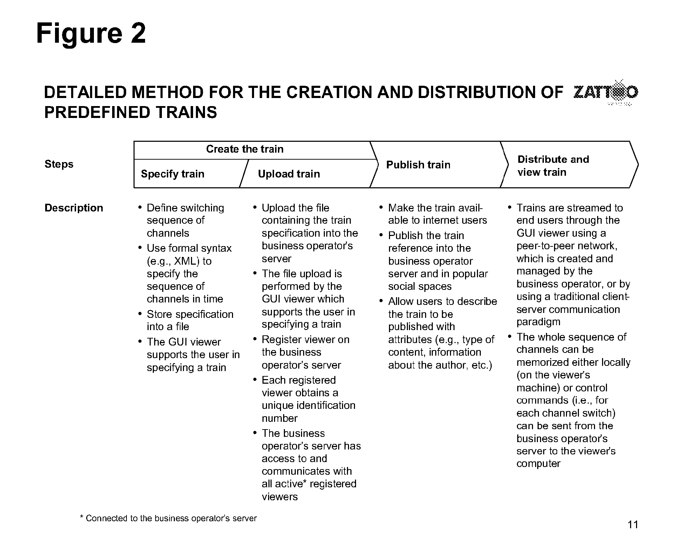

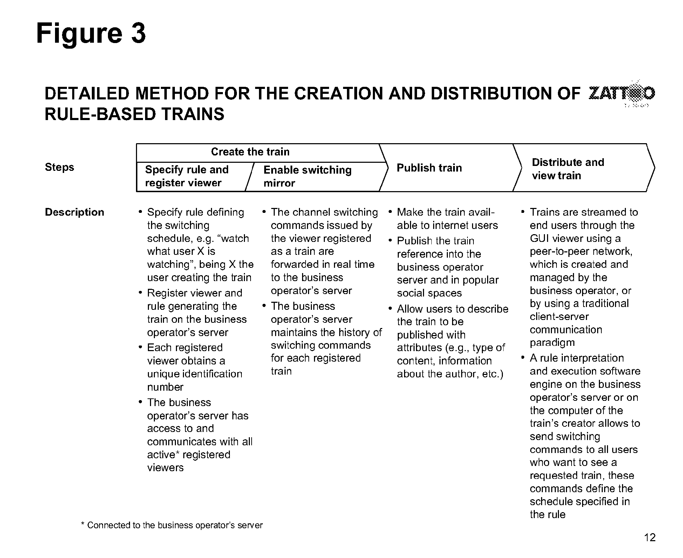

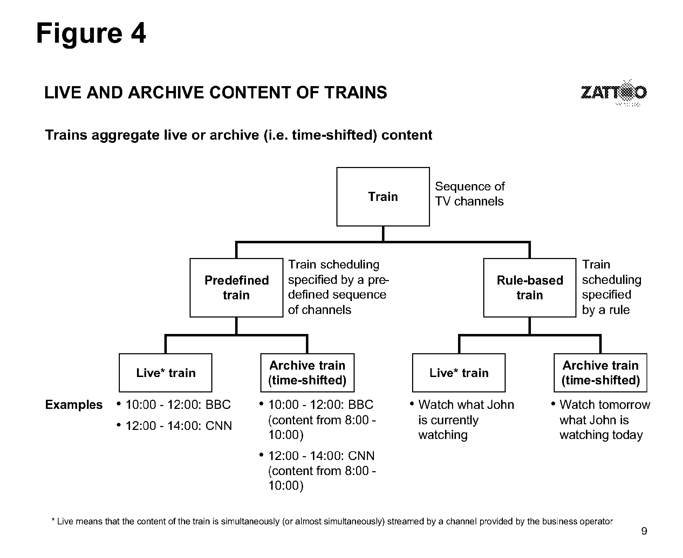

Trains can be classified in two categories:
1. Predefined trains which can be specified by users or by the business operator before viewing time. The specification comprises a sequence of channels and associated switching times.
2. Rule-based trains which can be specified by users or by the business operator by means of rules such as those listened in **[0004]**. The scheduling of such trains can be therefore dynamic and only defined during viewing time.
The steps of the method for the creation and distribution of predefined and rule-based trains are summarized in Figure 2 and Figure 3 respectively. Figure 4 provides an overview of the different types if trains. As described there predefined and rule-based trains can contain live and archive content. Content is defined as being live if it is simultaneously (or almost simultaneously) transmitted by a channel of the business operator. Archive content is time-shifted, i.e. transmitted first by a business operator's channel and simultaneously recorded and retransmitted later by a business operator's train.

Trains focus on the following opportunities and benefits:
- Creating individual channels by aggregating (i.e. mixing) content of other channels.
- Sharing individual channels between users.
- Enabling users to time-shift content, so that users can mix, watch, and share channels which have been transmitted earlier.
- Allowing users to add personal content (e.g. personal videos, video signals from webcams) on top of the content provided by the central business operator. A prescription to this is that users may be entitled to do so without infringing copyrights and censorship laws.

Predefined trains can be specified by defining the exact sequence of channels. Users specify this sequence using an interface of the software viewer. This can be e.g. a graphic user interface, a text based interface, or an application programming interface (API). The software viewer represents the sequence of channels using an internal notation which can be based on XML or on some other format. A train can be specified using an XML script of the form:
<train id= "ID-Train">
<channel id="ID-Channel1">
<start> start_time1 </start>
<end> end_time1 </end>
</channel>
<channel id="ID-Channel2">
<start> start_time2 </start>
<end> end_time2 </end>
</channel>
...
</train>

A valid predefined train needs to satisfy the following constraints:
- All ID-Channel belong to the set of channels that are broadcasted by the business operator and which the user is entitled to watch.
- start_time1 <end_time1<start_time2<end_time2, and so on.
Trains which do not satisfy the above constraint can be declared as not valid and cannot be published. Automatic verification may be performed by the software viewer or by a business operator's server. The user interface may warn the user in case of invalid trains and provide some advice to remove errors.

In the case of predefined trains which include recorded content, the syntax can be extended as follows:
<train id= "ID-Train">
<show time="show_time1 ">
<channel id="ID-Channel1">
<start> start_time1 </start>
<end> end_time1 </end>
</channel>
<channel id="ID-Channel2">
<start> start_time2 </start>
<end> end_time2 </end>
</channel>
</show>
<show time="show_time2">
<channel id="ID-Channel3">
<start> start_time3 </start>
<end> end_time3 </end>
</channel>
...
</show>
...
</train>

Valid predefined trains which contain time-shifted content need to satisfy the following constraints:
- All ID-Channel belong to the set of channels that are broadcasted by the business operator and which the user is entitled to watch.
- start_time1<end_time1, start_time2<end_time2, and so on.
- show_time1≥start_time1 (time-shifting condition allowing to record content before re-transmitting it), and so on.
- show_time2≥show_time1 + (end_time1-start_time1), and so on. Trains which do not satisfy the above constraint can be declared as not valid and cannot be published. Automatic verification may be performed by the software viewer or by a business operator's server. The user interface may warn the user in case of invalid trains and provide some advice to remove errors.

The server of the central business operator or the software viewer installed on the users' computers parses and interprets train specifications and finds out which content needs to be streamed live and which content needs to be recorded. In case of pre-defined trains, content which is time-shifted can be identified by the following time-shift condition:
*show_time_i> start_time*_*i*
   which indicates that the content may be streamed to the user *(show_time_i)* after it appeared for the first time live *(start_time_i).* The time-shift interval of the show is then:
*show_time*_*i-start_time*_*i*
If the time shift does not exceed the length of the show, i.e.
*show_time_i<end_time*_*i* then storage space can be optimized, as it is not necessary to record the whole show of length *end_time_i-start_time_i.* In this case, a rolling window needs to be stored which can be streamed to the viewer. This rolling window has the length *show_time_i-start_time_i.* After the train specification is interpreted, a sequence of instructions to record content is generated, in pseudocode:
*Record channel 1 from start_time1 to end_time1*
*Record channel 2 from start_time2 to end_time2*
...
These instructions can then be passed to the overall scheduling of records and duplicates can be eliminated, e.g. it might be possible that a given show is already scheduled to be recorded for another train defined by another user. Recorded content can be stored either on one or more business operator's servers or on one or more users' computers.

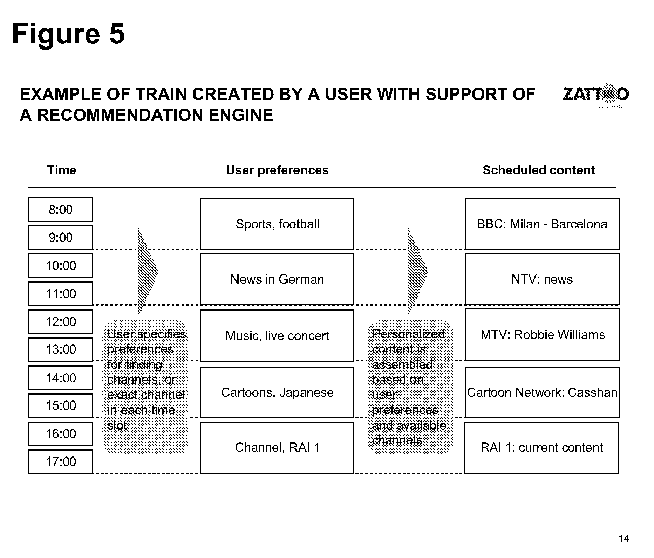

Figure 5 shows an example of a predefined train in which the user builds his own channel by aggregating content which is already streamed by the central business operator. In this example, the user is supported by a recommendation engine, integrated into the viewer, which matches available content with the categories specified by the user. Recommendation engines are particularly useful when the search space is very large, due to a large amount of available channels. Heuristics such as popularity indexes can be incorporated in the search. Trains can be created by using the e.g. graphical interface of the software viewer. Trains can be built on top of other trains, i.e. a new train can be based on the content of channels and/or other existing trains.

In the case of rule-based trains, the specification of the rule can be interpreted by the business operator's server or by the viewer installed on the users' computers. In the first case, appropriate control commands (i.e. channel switching or recording commands) are sent to the viewer of the users' computers. These commands can then be executed in the users' computers by the software viewer. In the second case, the software viewer generates the appropriate commands (i.e. channel switching or recording commands) and executes the train. According to the particular rule, the viewer may communicate with the central business operator and/or with one or more users' computers from which the train has been created. For example, the rule *"watch what John is watching"* can be interpreted in the following steps:
1. The business operator's server or the software viewer of the user who wants to watch what John is watching connects to the computer of John in order to read the switching commands issued by John.
2. If the business operator's server reads the switching commands issued by John, it may forward these commands to the users who want to watch what John is watching; the switching commands can then be executed by the viewer on the users' computers. If the software viewer of the users who want to watch what John is watching has direct access to the switching commands issues by John, it may execute the switching commands on the users' computers.

In order to provide some search support to users wanting to join (i.e. watch) predefined or rule-based trains, each train has some associated meta-tags; the creator of the train decides which values these tags may assume. A train can be better described by adding its meta-content to the specification, meta content can be specified using XML or other notations as follows:
<*meta-train*>
<*category*> *category1* </*category*>
<*category*> *category2* </*category*>
<*category*> *category3* </*category*>
</*meta-train*>

The above specification of meta content may be attached before or after the specification of a train. Categories are pre-defined for all users, i.e. categories assume only pre-defined values, or assume any value. Storage of trains may be central (i.e. the whole train is stored on a business operator's server or user's computer) or distributed (several parts of the same train are stored on more users' computers and/or business operator's servers).

Once a train has been created and its correctness has been formally verified, it needs to be published to be shared among other users. Appropriate incentive measures to share trains can therefore be defined. Publishing a train implies providing a train specification or a reference to a train specification. The train or reference to the train can be opened with the software viewer and can be stored in the server of the business operator, or on a user's computer, or in a social space. Trains can be published in a social space by dragging and dropping their graphic icon, using the graphical user interface (GUI) of the software viewer, into a social space website, or by uploading the train specification using a standard or proprietary protocol. The software viewer is able to automatically synchronize with a server of the business operator, or with other users' computers, or with social spaces and provides to the user a list of available trains. This list can be filtered with some criteria.

The server of the business operator maintains a counter tracking how many times a given train has been accessed. This is useful to rank trains according to popularity. When publishing a train, the counter is initialized to zero. In addition to the counter, each train has an associated average ranking. The ranking can be provided directly by users through the software viewer, an online average can be computed on-the-fly. Appropriate mechanisms guarantee that a user can rank a given train just once.

Users can watch trains by accessing them and executing them through the software viewer. There are several possibilities for users to access trains:
- Users can send through email a link of a train to other users.
- Users can access a train using a link which has been published in a social space.
- Trains can be accessed from the software viewer, which retrieves them by connecting to the business operator's server, or to other users' computes, or to social spaces.

Trains are characterized by the following attributes:
- A popularity index, derived from the number of times a train has been accessed for the first time.
- Meta-tags providing additional attributes (e.g., type of train, classification of content, etc.).
- User ranking, which can be submitted to a business operator's server directly through the viewer.
- Derived indexes, based on ranking of users, popularity, similarity to other trains (which can propagate their scores according to a degree of similarity).
- Information about the train's author.
When a train is accessed by a user for the first time, its popularity index can be incremented by one unit. During the visualization of trains, users have the option to rank the trains, according to a pre-defined scale. The rank may be then sent to a business operator's server.

In case of predefined trains with no recorded content the viewer generates a sequence of channel switching instructions, e.g. in pseudocode:
*Switch to channel1 from start_time1 to end_time 1*
*Switch to channel* 2 *from start_time2 to end_time2*
....

An alternative mechanism to execute predefined trains is based on sending switching commands. The software viewer initiates communication with a business operator's server by sending a command specifying which train needs to be shown to the user. If that train is available, the server sends a sequence of switching commands, i.e. channels switching instructions, back to the viewer using some internet protocol, e.g. in pseudocode:
*Switch to channel1 from start_time1 to end_time 1*
*Switch to channel* 2 *from start_time2 to end_time2*
....
This approach is more flexible than the one defined in section **[0028]** as the scheduling of channels can be changed by the business operator dynamically. This approach is always implemented in the case of rule-based trains.

Another option for the distribution and the execution of a train is to create a new channel for each train directly on a server of the business operator, this channel is then streamed directly to users, as in the case of the already existing channels. In this case, the sequence of switching commands specified above can be executed on the server.

Switching commands which are not allowed for reasons such as geographical filtering, user rights, etc. are not executed and the user can be informed with an appropriate error message.

In the case of trains featuring content which is time-shifted, additional instructions are generated for the content which is recorded, e.g. in pseudocode:
*Access record of channel* 2 *from start_time2 to end_time2*
*Access record of channel* 3 *from start_time3 to end_time3*
...
Recorded video content may be identified by a unique identification number. A one-to-one mapping between the record identification number and the channel together with the start-time and end-time can be established. The start-time and end-time specifications include as well the date. This allows retrieving the appropriate record block once the channel and the recording time have been specified.

In case of time-shifted content, if trains are not distributed and executed through a new ad-hoc created channel (as described in **[0030]**), the viewer connects to the server of the central business operator and finds out the identification number (ID) of the record by specifying the recording times (start and end) and the channel. The retrieved record can be then streamed directly to the user who requested it either by the business operator's server or by one or more users' computers which have the records stored in their memory. If a new channel is created, as described in section **[0030]**, the records can be assembled by the server of the business operator and streamed through a new channel created ad-hoc.

Trains can be distributed to users over the internet using appropriate protocols. There are the following options for the distribution of trains:
1. Unicast protocols, which establish a connection between a business operator's server and the user requesting the train. This is a classical client-server communication paradigm in computer networks.
2. Peer-to-peer protocols, which establish a connection between all the users which are requesting and watching a given train. In this case, there is no distinction between clients and servers, as each computer in the network acts both as client and as server at the same time by uploading/downloading part of the content to/from other peers.

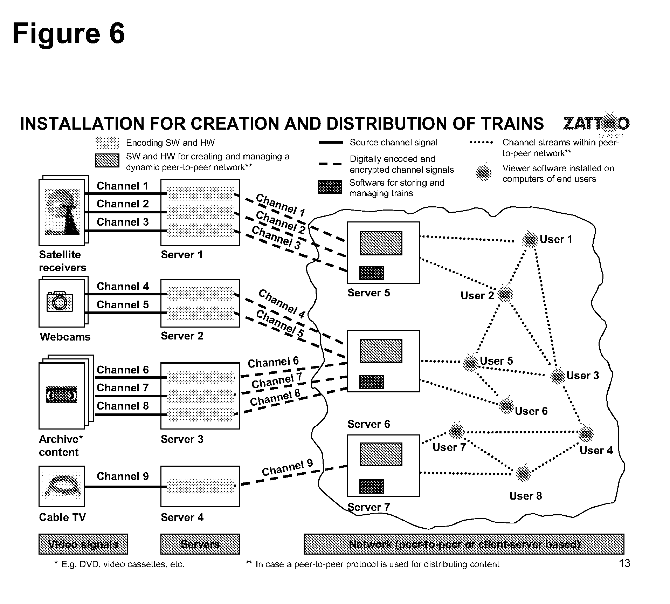

Creation and distribution of trains may be achieved by an installation comprising:
- At least one server connected to one or more video signals (originating from satellites, cables, webcams, archive content, or from other sources), having software and hardware installed on that server for encoding and streaming the channel content.
- At least one server, having software installed for storing and distributing multiple trains.
- A software viewer with integrated graphical user interface (GUI), which may be installed on the computers of the users. This software viewer allows users to create, publish, distribute, and view trains. Drag and drop functionalities support the creation of predefined trains by dragging channel schedule information from electronic program guides (EPG) and dropping this information on the viewer GUI, through which a personalized scheduling can be then created. The GUI provides drag and drop functionalities to upload created predefined trains in social spaces or in a business operator's server. Moreover, the software viewer allows specifying rules which define rule-based trains. These rules can then be published in a business operator's server and/or in social spaces.
An overview of the software and hardware components which need to be installed for the creation and distribution of trains is provided in Figure 6.

Software and hardware for the encoding of TV channels perform the following functionalities:
- Digitalising the video signal in case the signal is in analogue format, this can be achieved by using an analogue-to-digital converter embedded in a video capture card.
- Encoding and compressing the signal into a proprietary format or a licensed format (e.g. mpeg) using a video capture card.
- Encrypting the signal using some proprietary or licensed method. Encryption protects the streamed video content from potential copyright infringements.
For capturing and processing the video signals, the hardware includes a video card for capturing video and audio signals received in whatever way. Depending on the transmission type, an adequate antenna can be used. For instance, in case a DVB signal (Digital Video Broadcasting) is received, an antenna of the type DVB-S or DVB-T for satellite or terrestrial reception is being used, and a DVB-C interface in case of a cable transmission.

Software and hardware for the distribution of trains make it possible to stream the content which is scheduled by trains to internet users. A proprietary, or licensed, or internet protocol may be used for this. In case of a client-server communication paradigm, which uses unicast-based protocols, the server may be able to process in parallel a large number of users requesting video content. In case of a peer-to-peer communication paradigm, software for managing the network needs to be installed both on the server and on the computers of the users. This software implements the following functionalities:
- A set of graphs is memorized and maintained. Each node within a graph represents a computer of the network. All nodes, i.e. computers, within one graph represent users watching the same channel. Therefore, each channel has an associated graph. The edges of a graph represent pointers from one user to one or more other users. Each user in the network maintains in the memory of his computer parts of the graph associated to the channel currently being watched. In particular, the references to the direct neighbours are maintained in memory. In this way, each user in the network can establish a communication with a peer (i.e. another peer watching the same channel) in order to download and/or upload information.
- When a new user joins the network, i.e. the user wants to watch a channel streamed by the business operator, his computer can be added to the graph associated to the requested channel as a new node. The new user searches in the graph a peer which has enough capacity to stream part or all of the requested content. Search starts by submitting a request to the nodes which are directly connected by an edge. In case that the direct neighbours do not have sufficient capacity, the request can be forwarded to the second degree connections, i.e. the nodes connected to the nodes which are connected to the new user. This process continues until one or more peers, which can stream the requested content to the new user, are found.
- Business operator's servers acting as super-nodes can be used to provide additional network bandwidth in case of insufficient resources.

The software for storing and managing trains performs the following tasks:
- The trains (i.e. the specification of a schedule or of a rule) which are created by users or by the business operator can be stored in a storage medium, e.g. on a hard disk, flash memory or some other kind of storage medium.
- Each train has an associated unique ID (e.g. *train_id1*) which may be composed of the user ID and the timestamp at the moment of creation.
- Each train has a second unique ID (*train_id2*), defined by the value of the counter which counts all the trains.
- Each time a new train is submitted this counter can be incremented by one unit.
- A tree structure can be used to index trains according to the associated *train_id2,* this allows to optimize the search of trains as the ID values *train_id2* can be ordered.
- In case a predefined train is requested by a user, the file specifying the train can be downloaded using some internet protocol (e.g. http), or switching commands can be sent to the requesting user, or a new channel streaming the train is created by the business operator and the user switches to this channel. In case of rule-based trains switching commands can be used or a new channel may be created.
- Constraints described in sections **[0016]**, **[0018]** can be automatically verified.
- Time-shifted trains are identified and content can be recorded.
- The popularity index, ranking, and derived indexes can be computed as described in section **[0027]**.
- If required, switching commands can be generated and sent to the users' computers as described in **[0029]**.
- If required, a new channel can be created as described in **[0030]**.

Depending on the type of network protocol which is used, the software viewer installed on the computers of the users performs the following functionalities:
- In case of client-server communication protocol, the viewer acts as a client and requests to a business operator's server a train. The business operator's streams then to the software viewer the requested content.
- In case of a peer-to-peer communication protocol, the viewer implements the functionalities described in section **[0037]**.

Another aspect of trains is the creation of virtual communities. In fact, users who watch the same train can communicate with each other. A train can therefore be a social experience. A pre-requisite for the realization of trains and related virtual communities is to publish trains. The software viewer supports functionalities such as chat, teleconference, videoconference, etc. in order to facilitate communication between users.

To enhance communication between users watching a train, the following services can be provided to passengers of a train by the central business operator:
- Chat room.
- List of passengers (i.e. users who watch the same train) of a train and their public profiles.
- Possibility to watch the same train as another user.
- Possibility to watch the same train as the majority of users.
- Possibility to watch the same train as users which are members of a given virtual tribe (i.e. a sub-virtual community).

In order to maximize the sharing of trains and to enforce virtual communities, the following incentives can be used:
- Rank the most popular trains in the community to provide a social award to their creators.
- Provide capabilities to organize train parties, for instance after a movie, in which participants can get to know each other and communicate. To enhance social experience, train passengers with similar profiles (e.g. preferences, age) can be introduced to each other by a "friendship recommendation" system.
- Provide economic contributions to creators of popular trains, such as share of advertising revenue and/or free pay-per-view channel.
- Provide mechanisms to evaluate the train, so that users can assign a score to the train which has been watched.

## Claims

1. Method for the creation and distribution of personalized internet TV-channels, comprising the steps of:
a) Creating a train, comprising of a sequence of TV channels, archive content, or content streamed by other providers by defining the channel or source switching schedule, whereby the switching schedule may be defined by specifying the list of channels or sources with associated switching times or may be defined by rules;
b) Publishing the train or the reference to the train into the business operator server and/or in popular social spaces and/or into a user's computer which may be linked to the internet, by allowing users to describe the train to be published with attributes;
c) Distributing and viewing the train through the internet by retrieving the published train or a reference to the published train by connecting to the central business operator's server, or to social spaces, or to the user's computer, where the train has been published or is being published and executing the schedule of the train.

2. Method for the creation and distribution of personalized internet TV-channels according to claim 1, wherein in step c) the distribution and view of the train can be performed by a software viewer based on a peer-to-peer network, comprising several business operator's servers and the computational resources of the users themselves.

3. Method for the creation and distribution of personalized internet TV-channels according to one of the preceding claims, wherein in step a) the creation of the train can be performed ahead of transmitting time, and wherein step b) and c) take place with a time delay in respect to the creation of the train.

4. Method for the creation and distribution of personalized internet TV-channels according to one of the claims 1, 2, or 3, wherein in step a) the creation of the train can be performed ahead of transmitting time, and wherein in step c) the content of the train can be viewed according to the specified schedule with a time-delay in respect to its transmission.

5. Method for the creation and distribution of personalized internet TV-channels according to one of the claims 1, 2, or 3, wherein in step a) the creation of the train can be performed ahead of transmitting time, and wherein in step c) the content of the train can be viewed according to the specified schedule simultaneously with its transmission.

6. Method for the creation and distribution of personalized internet TV-channels according to one of the claims 1, 2, or 3, wherein in step a) the train is composed of the contents specified by a rule and wherein in step c) these contents can be viewed simultaneously with their transmission.

7. Method for the creation and distribution of personalized internet TV-channels according to one of the claims 1, 2, or 3, wherein in step a) the train is composed of the contents specified by a rule and wherein in step c) these contents can be viewed with a time-delay in respect to their transmission.

8. Installation for the creation and distribution of personalized TV-channels, comprising at least one business operator's server connected to sources of video content, having a digital-analogue-converter for the conversion of the video source signal into a digital signal, further a hardware and software installed on that server for compressing and encrypting said signal and for the storage and distribution of a multitude of trains and archive content, the server further comprising a software with user interface for visualizing and creating trains, the installation further comprising a number of users' computers having a software viewer installed, whereby the user interface, i.e. software viewer, allows users to connect to the business operator's server, or to popular social spaces, or to the users' computers via internet for creating, publishing, retrieving and executing trains which are published there.

9. Installation for the creation and distribution of personalized TV-channels according to claim 8, whereby the business operator's server and the viewers installed on the users' computers further comprise a software and technology for creating a peer-to-peer network which allows users to redistribute streams of the channels composing trains, thereby dramatically reducing overall streaming costs.

10. Software on an installation for the creation and distribution of personalized TV-channels according to claim 8 or 9, which allows:
a) Creating a train, comprising of a sequence of TV channels, archive content, or content streamed by other providers by defining the channel or source switching schedule, whereby the switching schedule may be defined by specifying the list of channels or sources with associated switching times or by rules;
b) Publishing the train or the reference to the train into the business operator server and/or in popular social spaces and/or into a user's computer which may be linked to the internet, by allowing users to describe the train to be published with attributes;
c) Distributing and viewing the train through the internet by retrieving the published train or a reference to the published train by connecting to the central business operator's server, or to social spaces, or to the user's computer, where the train has been published or is being published and executing the schedule of the train.

11. Software on an installation for the creation and distribution of personalized TV-channels according to claim 10 for the encoding of TV channels, having the following functionalities:
• Digitalizing of the video signal in case the signal is in analogue format by using an analogue-to-digital converter;
• Encoding and compressing the signal into a proprietary format or a licensed format;
• Encrypting the signal using a proprietary or licensed method for protecting the streamed video content from potential copyright infringements.
